# EUROPEAN PATENT APPLICATION

(11) **EP 2 978 236 A1**
(43) Date of publication of application: **27.01.2016**
(21) Application number: 15173300.3
(22) Date of filing: 23.06.2015
(51) Int. Cl.: H04Q 9/00, G09F 3/20

(54) **ELECTRONIC SHELF LABEL TAG, ELECTRONIC SHELF LABEL SYSTEM AND OPERATING METHOD THEREOF**

(30) Priority: 23.07.2014 KR 20140093040
(71) Applicant: Samsung Electro-Mechanics Co., Ltd., Gyeonggi-do (KR)
(72) Inventor: KIM, Young Suk, Gyeonggi-do (KR); LEE, Hae Won, Gyeonggi-do (KR)
(74) Representative: Grünecker Patent- und Rechtsanwälte PartG mbB

(57) **Abstract**

An electronic shelf label tag includes a storage unit storing a power level mapping table including predetermined power levels, a control unit measuring a first voltage of a battery provided in the electronic shelf label tag after being woken-up from a sleep mode, measuring a second voltage of the battery after receiving data from an electronic shelf label gateway, and generating power level information using the power level mapping table which is pre-stored in the storage unit, based on the first voltage and the second voltage, and a communications unit transmitting a packet including the power level information to the electronic shelf label gateway.

## Description

### CROSS-REFERENCE TO RELATED APPLICATION

This application claims priority to, and the benefit of, Korean Patent Application No. 10-2014-0093040 filed on July 23, 2014, with the Korean Intellectual Property Office, the disclosure of which is incorporated herein by reference.

### BACKGROUND

The present disclosure relates to an electronic shelf label tag, an electronic shelf label (ESL) system, and an operating method thereof.

An electronic shelf label (ESL) system may include an electronic shelf label repeater (e.g., a gateway) and a plurality of electronic shelf label tags (e.g., electronic tags) connected to the electronic shelf label repeater via a wireless network.

Here, it is necessary to periodically exchange a power supply (e.g., a battery) of the electronic shelf label tag, and the timing of such an exchange is an important consideration. For example, when a battery is unnecessarily exchanged, while sufficient power remains stored in the battery, may be uneconomical, while when the power of the battery is exhausted earlier than anticipated due to a large amount of communications, operations of the electronic shelf label tag may be stopped or malfunctions may occur therein.

In this context, the following Related Art Document (Patent Document 1) discloses an electronic shelf label and a method for managing residual battery charge.

### [Related Art Document]

(Patent Document 1) Korean Patent Laid-Open Publication No. 2012-0077949 (published on July 10, 2012)

### SUMMARY

An aspect of the present disclosure may provide a method for monitoring residual charge in a battery provided in an electronic shelf label tag in order to determine an appropriate time to change the battery provided in the electronic shelf label tag.

According to an aspect of the present disclosure, an electronic shelf label tag may be provided.

The electronic shelf label tag may include a storage unit, a control unit, and a communications unit.

The control unit may measure a first voltage of a battery provided in the electronic shelf label tag after being woken-up from a sleep mode, measure a second voltage of the battery after receiving data from an electronic shelf label gateway, and generate power level information using the power level mapping table which is pre-stored in the storage unit based on the first voltage and the second voltage.

The power level mapping table may include a plurality of power levels and a respective power level may define a power level information value mapped with the first voltage value and the second voltage value.

The control unit may obtain power level information of a current period in which the first voltage and the second voltage are mapped, using the power level mapping table, and may determine power level information to be transmitted to the electronic shelf label gateway according to a result obtained by comparing the power level information of the current period and power level information of a preceding period.

The control unit may determine a value obtained by adding one to the power level information of the preceding period to be the power level information when a value of the power level information of the current period is greater than a value of the power level information of the preceding period, determine a value obtained by subtracting one from the power level information of the preceding period to be the power level information when the value of the power level information of the current period is smaller than the value of the power level information of the preceding period, and determine the power level information of the preceding period to be the power level information when the power level information of the current period is equal to the power level information of the preceding period.

According to another aspect of the present disclosure, an operating method of an electronic shelf label tag may be provided.

The operating method of the electronic shelf label tag may include measuring a sleep voltage of a battery provided in the electronic shelf label tag after the electronic shelf label tag is woken-up from a sleep mode, measuring an active voltage of the battery after the electronic shelf label tag receives data from an electronic shelf label gateway, determining whether or not identification information corresponding to the electronic shelf label tag is included in the data received from the electronic shelf label gateway, generating power level information based on the sleep voltage and the active voltage when the identification information is included in the data, and transmitting, by the electronic shelf label tag, a packet including the power level information to the electronic shelf label gateway.

In an operating method of an electronic shelf label tag according to another exemplary embodiment in the present disclosure, an order of the determining of whether or not the identification information is included in the data and the generating of the power level information may be changed. In other words, after the power level information is generated based on the measured sleep voltage and active voltage, whether or not the identification information corresponding to the electronic shelf label tag is included in the data received from the electronic shelf label gateway may be checked, and when the identification information is included in the data, the electronic shelf label tag may transmit the packet including the power level information to the electronic shelf label gateway.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a configuration block diagram of an electronic shelf label system including an electronic shelf label tag according to an exemplary embodiment in the present disclosure;
FIG. 2 is a block diagram of the electronic shelf label tag according to an exemplary embodiment in the present disclosure;
FIG. 3 is a flow chart of an operating method when the electronic shelf label tag initially receives product information, according to an exemplary embodiment in the present disclosure;
FIGS. 4 and 5 are flow charts of an operating method after the electronic shelf label tag receives the product information, according to an exemplary embodiment in the present disclosure; and
FIG. 6 is a flow chart of a method in which the electronic shelf label tag generates power level information based on values of a sleep voltage and an active voltage value, according to an exemplary embodiment in the present disclosure.

### DETAILED DESCRIPTION

Exemplary embodiments in the present disclosure will now be described in detail with reference to the accompanying drawings.

The disclosure may, however, be embodied in many different forms and should not be construed as being limited to the embodiments set forth herein. Rather, these embodiments are provided so that this disclosure will be thorough and complete, and will fully convey the scope of the disclosure to those skilled in the art.

In the drawings, the shapes and dimensions of elements may be exaggerated for clarity, and the same reference numerals will be used throughout to designate the same or like elements.

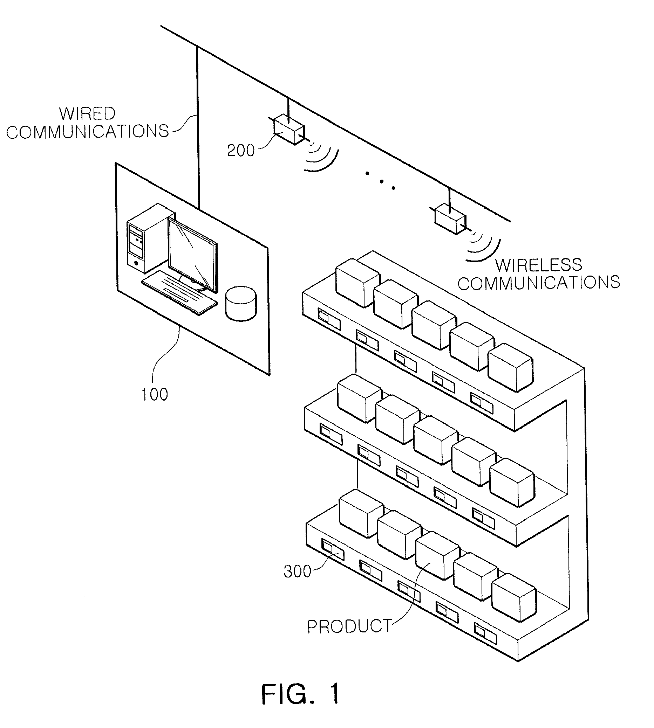

FIG. 1 is a configuration block diagram of an electronic shelf label system including an electronic shelf label tag according to an exemplary embodiment in the present disclosure.

Referring to FIG. 1, the electronic shelf label system according to an exemplary embodiment in the present disclosure may include an electronic shelf label server 100 (for example, an ESL server), a plurality of electronic shelf label gateways 200 (e.g., gateways), and a plurality of electronic shelf label tags 300 (e.g., electronic tags).

The electronic shelf label server 100 may transmit product information including price information, and the like to the plurality of electronic shelf label gateways 200 through a wired communications network (e.g., Ethernet).

In addition, the electronic shelf label server 100 may receive power level information on the plurality of respective electronic shelf label tags 300 from the plurality of respective electronic shelf label gateways 200 and may monitor residual charge in a battery provided in the plurality of respective electronic shelf label tags 300 based on the received power level information.

The plurality of electronic shelf label gateways 200 may respectively perform wireless communications with the plurality of electronic shelf label tags 300.

For example, the plurality of electronic shelf label gateways 200 may respectively transmit the product information received from the electronic shelf label server 100 to the plurality of electronic shelf label tags 300. In addition, the plurality of electronic shelf label gateways 200 may respectively receive a packet including the power level information from the plurality of respective electronic shelf label tags 300 and may extract power level information so as to transmit the extracted power level information to the electronic shelf label server 100.

The plurality of electronic shelf label tags 300 may respectively, continuously monitor the residual charge in the battery, generate the power level information based on the monitored result, and transmit a packet including the generated power level information to the electronic shelf label gateway.

For example, the plurality of electronic shelf label tags 300 may respectively be periodically woken-up while being in a sleep mode in order to reduce power consumption, and may respectively update a change of the product information in a case in which the product information is changed and then again enter the sleep mode.

In this case, the plurality of electronic shelf label tags 300 may respectively measure a sleep voltage after being woken-up from the sleep mode and may respectively measure an active voltage after performing activation resp (RX), for example, receiving data from the electronic shelf label gateway.

There may be a large difference between a voltage measured immediately after the electronic shelf label tag is woken-up from the sleep mode and a voltage measured after performing the RX. For example, in a case in which the residual charge in the battery is not sufficient, the voltage may be high immediately after the electronic shelf label tag is woken-up from the sleep mode, but the voltage may be significantly decreased after performing the RX.

Therefore, according to an exemplary embodiment in the present disclosure, since the electronic shelf label tag 300 measures the sleep voltage and the active voltage, respectively, the residual charge in the battery may be more accurately detected.

In addition, the plurality of electronic shelf label tags 300 may respectively generate the power level information based on the measured sleep voltage and active voltage and transmit the packet including the power level information to the electronic shelf label gateway when requesting the product information to the electronic shelf label tag.

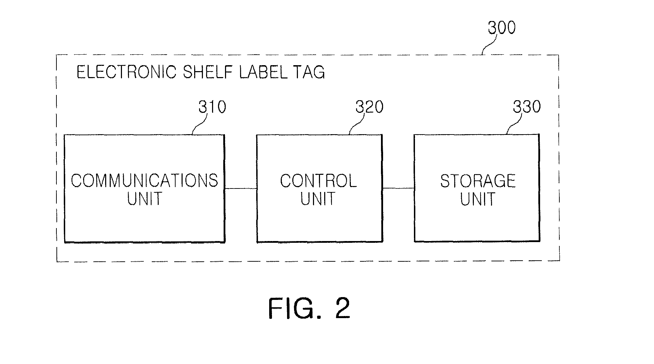

FIG. 2 is a block diagram of the electronic shelf label tag according to an exemplary embodiment in the present disclosure.

Referring to FIG. 2, the electronic shelf label tag 300 according to an exemplary embodiment in the present disclosure may include a communications unit 310, a control unit 320, and a storage unit 330.

The communications unit 310, which is to perform wireless communications with the plurality of electronic shelf label gateways 200, may be implemented by a wireless communications technology such as Zigbee, or the like.

For example, the packet including the power level information generated by the electronic shelf label tag 300 may be transmitted to the electronic shelf label gateway through the communications unit 310.

The control unit 320, which is to perform an overall operation control of the electronic shelf label tag 300, may be implemented by a microprocessor, or the like.

For example, the control unit 320 may control the electronic shelf label tag 300 so that the sleep voltage is measured after the electronic shelf label tag 300 is woken-up from the sleep mode and the active voltage is measured after the electronic shelf label tag 300 receives the data from the electronic shelf label gateway. In addition, the control unit 320 may control the electronic shelf label tag so that the electronic shelf label tag generates the power level information based on the measured sleep voltage and active voltage and transmits the packet carrying the generated power level information to the electronic shelf label gateway when requesting the product information to the electronic shelf label gateway.

The storage unit 330, which is to store the data, may store, for example, a power level mapping table including predetermined power levels to generate the power level information, power level information generated at each period, and the like.

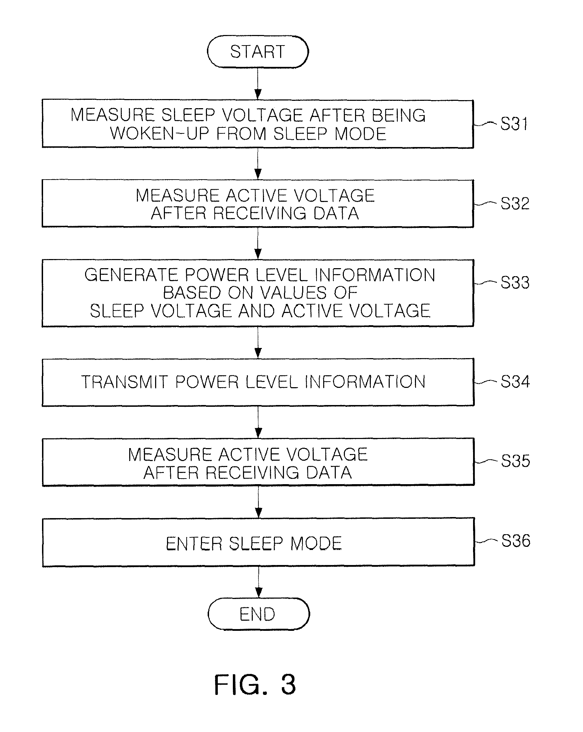

FIG. 3 is a flow chart of an operating method when the electronic shelf label tag initially receives the product information, according to an exemplary embodiment in the present disclosure.

Referring to FIG. 3, in a case in which the electronic shelf label tag initially receives product information according to an exemplary embodiment in the present disclosure, the electronic shelf label tag may measure a sleep voltage of a battery provided in the electronic shelf label tag after being woken-up from the sleep mode (S31).

Next, the electronic shelf label tag may measure an active voltage of the battery after receiving data from the electronic shelf label gateway, for example, performing activation resp (RX) (S32). Here, RX may refer to one that the electronic shelf label tag receives data including its own identification information (e.g., event ID information) from the electronic shelf label gateway.

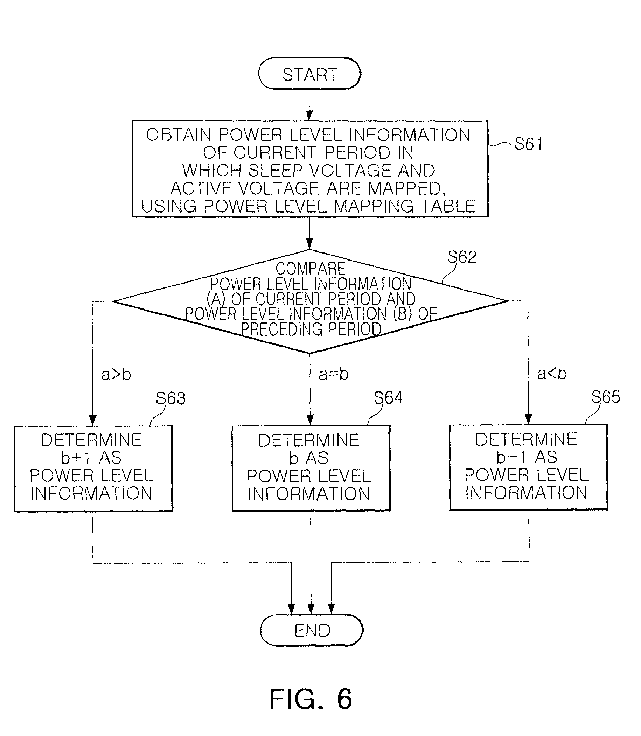

Next, the electronic shelf label tag may generate power level information based on values of the measured sleep voltage and active voltage (S33). A detailed method in which the electronic shelf label tag generates the power level information based on the values of the sleep voltage and active voltage will be described below with reference to FIG. 6.

Next, the electronic shelf label tag may transmit a packet including the power level information to the electronic shelf label gateway upon performing inquiry req (TX) (S34). Here, TX may refer to one that the electronic shelf label tag transmits the data to the electronic shelf label gateway in order to request product information corresponding to its own identification information.

Next, the electronic shelf label tag may measure the active voltage after receiving the data from the electronic shelf label gateway, for example, performing activation resp (RX) (S35). Here, RX may refer to one that the electronic shelf label tag receives the product information including price information, and the like from the electronic shelf label gateway.

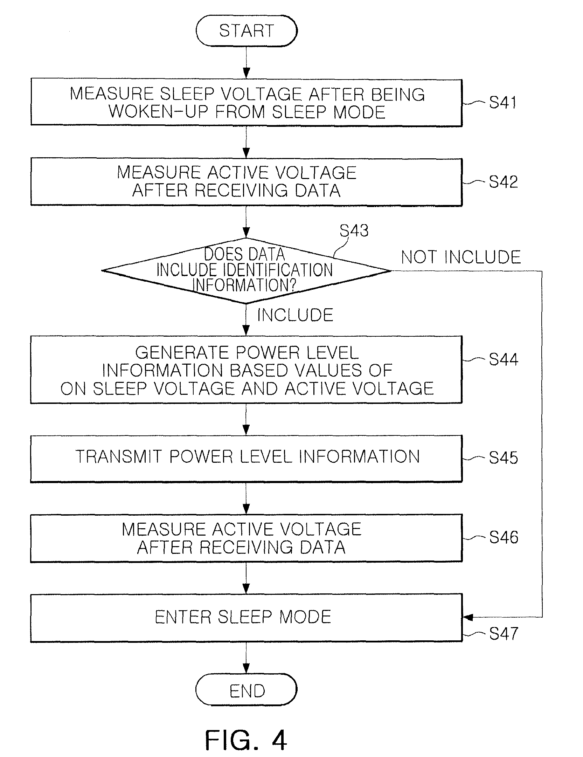

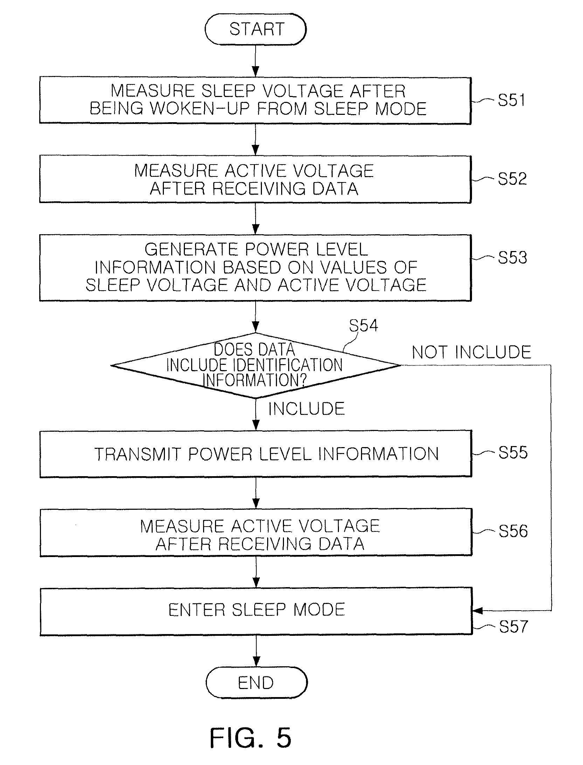

Next, the electronic shelf label tag may again enter the sleep mode (S36). The electronic shelf label tag entering the sleep mode may be woken-up from the sleep mode after a predetermined time lapses. In this case, the electronic shelf label tag may be operated as shown in FIG. 4 or 5.

FIGS. 4 and 5 are flow charts of an operating method after the electronic shelf label tag receives the product information, according to an exemplary embodiment in the present disclosure.

First, referring to FIG. 4, when the electronic shelf label tag is operated after initially receiving the product information according to an exemplary embodiment in the present disclosure, the electronic shelf label tag may measure the sleep voltage of the battery provided in the electronic shelf label tag after being woken-up from the sleep mode (S41).

Next, the electronic shelf label tag may measure the active voltage of the battery after receiving the data from the electronic shelf label gateway, for example, performing the activation resp (RX) (S42). Here, RX may include one that the electronic shelf label tag receives identification information (e.g., event ID information) of the electronic shelf label tag from the electronic shelf label gateway, and after the electronic shelf label tag initially receives the product information, identification information of the electronic shelf label tag may not be included in the received information.

Thereby, the electronic shelf label tag may determine whether or not the data received upon performing the RX includes its own identification information (S43), and if the data includes the identification information of the electronic shelf label tag, the electronic shelf label tag may generate the power level information based on the values of the measured sleep voltage and active voltage (S44).

On the other hand, if the data does not include the identification information of the electronic shelf label tag, the electronic shelf label tag may again enter the sleep mode (S47).

Next, the electronic shelf label tag may transmit a packet including the power level information to the electronic shelf label gateway upon performing inquiry req (TX) (S45). Here, TX may refer to one that the electronic shelf label tag transmits the data to the electronic shelf label gateway in order to request the product information corresponding to its own identification information.

Next, the electronic shelf label tag may measure the active voltage after receiving the data from the electronic shelf label gateway, for example, performing the activation resp (RX) (S46). Here, RX may refer to one that the electronic shelf label tag receives the product information including price information, and the like from the electronic shelf label gateway.

Next, the electronic shelf label tag may again enter the sleep mode (S47).

The electronic shelf label tag entering the sleep mode may be woken-up from the sleep mode after a predetermined time lapses. In this case, the electronic shelf label tag may be operated according to operations S41 to S47 described above.

Meanwhile, an operating method shown in FIG. 5 is the same as the operating method shown in FIG. 4 except that an order of operations S43 and S44 is reversed.

Specifically, the electronic shelf label tag may measure the sleep voltage of the battery provided in the electronic shelf label tag after being woken-up from the sleep mode (S51).

Next, the electronic shelf label tag may measure the active voltage of the battery after receiving the data from the electronic shelf label gateway, for example, performing the activation resp (RX) (S52). Here, RX may include one that the electronic shelf label tag receives identification information (e.g., event ID information) of the electronic shelf label tag from the electronic shelf label gateway, and after the electronic shelf label tag initially receives the product information, the identification information of the electronic shelf label tag may not be included in the received information.

Next, the electronic shelf label tag may generate power level information based on values of the measured sleep voltage and active voltage (S53).

Next, the electronic shelf label tag may determine whether or not the data received upon performing the RX includes its own identification information (S54), and if the data includes the identification information of the electronic shelf label tag, the electronic shelf label tag may transmit the packet including the power level information to the electronic shelf label gateway upon performing inquiry req (TX) (S55). Here, TX may refer to one that the electronic shelf label tag transmits the data to the electronic shelf label gateway in order to request the product information corresponding to its own identification information.

On the other hand, if the data does not include the identification information of the electronic shelf label tag, the electronic shelf label tag may again enter the sleep mode (S57).

Next, the electronic shelf label tag may measure the active voltage after receiving the data from the electronic shelf label gateway, for example, performing the activation resp (RX) (S56). Here, RX may refer to one that the electronic shelf label tag receives the product information including price information, and the like from the electronic shelf label gateway.

Next, the electronic shelf label tag may again enter the sleep mode (S57).

The electronic shelf label tag entering the sleep mode may be woken-up from the sleep mode after a predetermined time lapses. In this case, the electronic shelf label tag may be operated according to operations S51 to S57 described above.

According to the operating method shown in FIG. 5, even in a case in which the electronic shelf label tag does not need to perform the inquiry req (TX) because the data does not include the identification information of the electronic shelf label tag, for example, in a case in which the electronic shelf label tag does not transmit the power level information to the electronic shelf label gateway, the electronic shelf label tag may generate the power level information based on the values of the measured sleep voltage and active voltage and store the power level information in an embedded memory.

The power level information stored in the embedded memory may be utilized as power level information of a preceding period during a process of generating the power level information to be described below with reference to FIG. 6.

Therefore, in determining power level information of a current period, accuracy may be more increased than a case in which the values of the measured voltages are not considered while the TX is not performed because the power level information is not generated in a case in which there is no need to perform the TX.

FIG. 6 is a flow chart of a method in which the electronic shelf label tag generates the power level information based on the values of the sleep voltage and active voltage, according to an exemplary embodiment in the present disclosure.

Referring to FIG. 6, the electronic shelf label tag may acquire power level information of a current period in which the sleep voltage and the active voltage are mapped, using a power level mapping table (S61).

Here, the power level mapping table may be pre-stored in an embedded memory of the electronic shelf label tag. The power level mapping table may include a plurality of power levels, each of which defines a power level information value mapped with the actually measured active voltage value and sleep voltage value.

Table 1 illustrates one example of the power level mapping table in which the power level is configured of 16 levels. The conf iguration of the power level (i.e., the number of power levels), the active and sleep voltage values defined for each power level, and the power level information value in the power level mapping table may be variously changed by a system designer.

**[Table 1]**

| level | Active Voltage | Sleep Voltage | Power level information |
|---|---|---|---|
| 15 | 2.80 | 3.0 | 0xFF |
| 14 | 2.76 | 2.96 | 0xEE |
| 13 | 2.72 | 2.92 | 0xDD |
| 12 | 2.68 | 2.88 | 0xCC |
| 11 | 2.64 | 2.84 | 0xBB |
| 10 | 2.60 | 2.80 | 0xAA |
| 9 | 2.56 | 2.76 | 0x99 |
| 8 | 2.52 | 2.72 | 0x88 |
| 7 | 2.48 | 2.68 | 0x77 |
| 6 | 2.44 | 2.64 | 0x66 |
| 5 | 2.40 | 2.60 | 0x55 |
| 4 | 2.36 | 2.56 | 0x44 |
| 3 | 2.2 | 2.52 | 0x33 |
| 2 | 2.28 | 2.48 | 0x22 |
| 1 | 2.24 | 2.44 | 0x11 |
| 0 | 2.20 | 2.40 | 0x00 |

Next, the electronic shelf label tag may compare the power level information a of the current period and the power level information b of the preceding period (S62) and determine power level information to be transmitted to the electronic shelf label gateway depending on the comparison result.

Specifically, in a case in which a value of the power level information a of the current period is greater than a value of the power level information b of the preceding period, the electronic shelf label tag may not determine the power level information a of the current period obtained in operation S61 to be the power level information, but determine a value b+1 obtained by adding one to the power level information of the preceding period to be the power level information (S63).

This is to provide more accurate voltage level information by correcting error in a case in which a voltage level is changed to be greater than the preceding period due to error in measuring the voltage.

In addition, as shown in FIG. 5, when the electronic shelf label tag generates the power level information based on the values of the measured sleep voltage and active voltage and stores the power level information in the embedded memory even in the case in which there is no need to perform the TX, as shown in FIG. 5, the accuracy in determining the power level information may be further increased.

On the other hand, in a case in which the value of the power level information a of the current period is smaller than the value of the power level information b of the preceding period, the electronic shelf label tag may determine a value b-1 obtained by subtracting one from the power level information of the preceding period to be the power level information (S65) .

In addition, in a case in which the power level information a of the current period is equal to the power level information b of the preceding period, the electronic shelf label tag may determine the power level information b of the preceding period to be the power level information (S64).

Although not shown in FIG. 6, in a case in which the current period is an initial period, the electronic shelf label tag may determine the power level information a of the current period obtained in operation S61 to be the power level information.

As set forth above, according to exemplary embodiments in the present disclosure, an appropriate time to change the battery provided in the electronic shelf label tag may be determined by continuously monitoring the residual charge in the battery provided in the electronic shelf label tag.

While exemplary embodiments have been shown and described above, it will be apparent to those skilled in the art that modifications and variations could be made without departing from the scope of the present invention as defined by the appended claims.

## Claims

1. An electronic shelf label tag comprising:
a storage unit storing a power level mapping table including predefined power levels;
a control unit measuring a first voltage of a battery provided in the electronic shelf label tag after being woken-up from a sleep mode, measuring a second voltage of the battery after receiving data from an electronic shelf label gateway, and generating power level information using the power level mapping table which is pre-stored in the storage unit based on the first voltage and the second voltage; and
a communications unit transmitting a packet including the power level information to the electronic shelf label gateway.

2. The electronic shelf label tag of claim 1, wherein the power level mapping table includes a plurality of power levels and a respective power level defines a power level information value mapped with the first voltage value and the second voltage value.

3. The electronic shelf label tag of claim 1, wherein the control unit obtains power level information of a current period in which the first voltage and the second voltage are mapped, using the power level mapping table, and determines power level information to be transmitted to the electronic shelf label gateway according to a result obtained by comparing the power level information of the current period and power level information of a preceding period.

4. The electronic shelf label tag of claim 3, wherein the control unit determines a value obtained by adding one to the power level information of the preceding period to be the power level information when a value of the power level information of the current period is greater than a value of the power level information of the preceding period, determines a value obtained by subtracting one from the power level information of the preceding period to be the power level information when the value of the power level information of the current period is smaller than the value of the power level information of the preceding period, and determines the power level information of the preceding period to be the power level information when the power level information of the current period is equal to the power level information of the previous period.

5. An electronic shelf label system comprising:
a plurality of electronic shelf label tags monitoring residual charge in a battery and generating power level information based on the monitored result; and
a plurality of electronic shelf label gateways receiving a packet including power level information of a respective electronic shelf label tag from the plurality of electronic shelf label tags and transmitting the power level information to an electronic shelf label server.

6. The electronic shelf label system of claim 5, wherein each of the plurality of electronic shelf label tags includes:
a storage unit storing a power level mapping table including predefined power levels;
a control unit measuring a first voltage of power in the battery after being woken-up from a sleep mode, measuring a second voltage of the power after receiving data from the plurality of electronic shelf label gateways, and generating the power level information using the power level mapping table which is pre-stored in the storage unit, based on the first voltage and the second voltage; and
a communications unit transmitting a packet including the power level information to the plurality of electronic shelf label gateways.

7. The electronic shelf label system of claim 6, wherein the power level mapping table includes a plurality of power levels and each power level defines a power level information value mapped with the first voltage value and the second voltage value.

8. The electronic shelf label system of claim 6, wherein the control unit obtains power level information of a current period in which the first voltage and the second voltage are mapped, using the power level mapping table, and determines power level information to be transmitted to the plurality of electronic shelf label gateways according to a result obtained by comparing the power level information of the current period and power level information of a preceding period.

9. The electronic shelf label system of claim 8, wherein the control unit determines a value obtained by adding one to the power level information of the preceding period to be the power level information when a value of the power level information of the current period is greater than a value of the power level information of the preceding period, determines a value obtained by subtracting one from the power level information of the preceding period to be the power level information when the value of the power level information of the current period is smaller than the value of the power level information of the preceding period, and determines the power level information of the preceding period to be the power level information when the power level information of the current period is equal to the power level information of the preceding period.

10. An operating method of an electronic shelf label tag, the operating method comprising:
measuring a sleep voltage of a battery provided in the electronic shelf label tag after the electronic shelf label tag is woken-up from a sleep mode;
measuring an active voltage of the battery after the electronic shelf label tag receives data from an electronic shelf label gateway;
determining whether or not identification information corresponding to the electronic shelf label tag is included in the data received from the electronic shelf label gateway;
generating power level information based on the sleep voltage and the active voltage when the identification information is included in the data; and
transmitting, by the electronic shelf label tag, a packet including the power level information to the electronic shelf label gateway.

11. The operating method of claim 10, wherein in the generating of the power level information, the power level information is generated using a power level mapping table which is pre-stored.

12. The operating method of claim 11, wherein the power level mapping table includes a plurality of power levels and a respective power level defines a power level information value mapped with an active voltage value and a sleep voltage value.

13. The operating method of claim 10, wherein the generating of the power level information includes:
obtaining power level information of a current period in which the sleep voltage and the active voltage are mapped, using a power level mapping table which is pre-stored;
comparing the power level information of the current period and power level information of a preceding period; and
determining power level information to be transmitted to the electronic shelf label gateway according to the comparison result.

14. The operating method of claim 13, wherein the determining of the power level information includes:
determining a value obtained by adding one to the power level information of the preceding period to be the power level information when a value of the power level information of the current period is greater than a value of the power level information of the preceding period,
determining a value obtained by subtracting one from the power level information of the preceding period to be the power level information when the value of the power level information of the current period is smaller than the value of the power level information of the preceding period, and
determining the power level information of the preceding period to be the power level information when the power level information of the current period is equal to the power level information of the preceding period.

15. The operating method of claim 10, further comprising entering, by the electronic shelf label tag, the sleep mode when the identification information is not included in the data.
